# EUROPÄISCHE PATENTSCHRIFT

(11) **EP 0 982 179 B1**
(45) Veröffentlichungstag und Bekanntmachung des Hinweises auf die Patenterteilung: **22.09.2004**
(21) Anmeldenummer: 99113000.6
(22) Anmeldetag: 06.07.1999
(51) Int. Cl.: B60N 2/24

(54) **Fahrgastsitz mit versteifter Rückenlehne**
Passenger seat with stiffened backrest
Siège de passager à dossier rigidifié

(30) Priorität: 28.08.1998 DE 19839326
(43) Veröffentlichungstag der Anmeldung: 01.03.2000
(73) Patentinhaber: Vogelsitze GmbH, 76228 Karlsruhe (DE)
(72) Erfinder: Ehemann, Ernst K., Dipl.-Ing., 76227 Karlsruhe (DE); Klein, Adolf, 32049 Herford (DE)
(74) Vertreter: Dimmerling, Heinz, Dipl.-Ing.

(56) Entgegenhaltungen:
- EP-A- 0 677 421
- WO-A-92/03074
- DE-A- 4 442 246
- DE-A- 19 638 472
- DE-U- 8 628 464
- US-A- 3 848 925
- US-A- 4 088 367
- US-A- 4 118 061

## Beschreibung

Die Erfindung betrifft einen Fahrgastsitz für ein Personenbeförderungsfahrzeug mit einer dünnwandigen Rückenlehne.

Ein derartiger Fahrgastsitz wird überwiegend im öffentlichen Personennahverkehr verwendet. Die Rückenlehne ist mit dem Sitzteil regelmäßig einstückig ausgebildet, so daß eine Sitzschale vorhanden ist. Die Sitzschale ist lediglich mit ihrem Sitzteil auf einem Gestell montiert. Einen Rahmen weist der Fahrgastsitz nicht auf.

Aus Kostengründen sowie aus Gründen einer Gewichtseinsparung soll die Sitzschale möglichst dünnwandig und leicht ausgebildet sein. Der dünnwandigen Ausbildung sind jedoch Grenzen durch die Stabilität und Festigkeit gesetzt. So können die bisher bekannten Sitze aus Gründen der Stabilität nicht so dünnwandig gemacht werden, wie es wünschenswert wäre.

Ein Oberbegriffswägiger Fahrgastsitz wird durch das US 4 088 367 beschrieben.

Es ist Aufgabe der Erfindung einen eingangs genannten Fahrgastsitz derart auszubilden, daß er bei ausreichender Stabilität sehr dünnwandig ausgebildet werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist die Rückenlehne doppelwandig ausgebildet. Durch die Doppelwandigkeit wird die Stabilität der Rückenlehne stark erhöht. Besonders günstig ist es, daß die außenseitige Wand der Rückenlehne als Deckel ausgebildet ist. Dies hat den Vorteil, daß die Rückseite der Rückenlehne ausgewechselt werden kann. Dies ist besonders zweckmäßig, wenn die rückseitige Wand der Rückenlehne beschädigt ist. Die rückseitige Wand der Rückenlehne könnte auch mit einer Werbung versehen sein, welche dann auf einfache Weise gegen eine andere Werbung ausgetauscht werden kann. Darüber hinaus kann durch unterschiedliche Ausbildung des Deckels die Stabilität der Rückenlehne variiert werden.

Als besonders günstig hat sich auch eine Ausführungsform des Fahrgastsitzes herausgestellt, bei dem zwischen den beiden Wänden der Rückenlehne ein Hohlraum besteht. Durch diesen Hohlraum wird eine Kammer gebildet, welche im Hinblick auf die Stabilität der Rückenlehne wie ein Kastenholm oder Rohr wirkt.

Besonders vorteilhaft ist es, wenn der Deckel auf die innenseitige Wand der Rükkenlehne aufgeklebt ist. Bei Verwendung eines Klebers, welcher in Zugrichtung eine sehr große Haftkraft aufweist und in Scherrichtung eine geringe Haftkraft aufweist, läßt sich der Deckel beispielsweise durch Verschieben nach oben leicht von der innenseitigen Wand entfernen. Bei Verwendung eines derartigen Klebers ist es besonders vorteilhaft, wenn der Deckel beispielsweise im unteren Bereich mit der innenseitigen Wand verschraubt ist. Der Deckel ist zweckmäßigerweise als Schale ausgebildet, welche abgebogene Ränder hat. Die abgebogenen Ränder bieten eine gute Fläche zum Verkleben des Deckels mit der innenseitigen Wand. Darüber hinaus könnte die innenseitige Wand Ausnehmungen aufweisen, in welche die abgebogenen Ränder des Deckels eingreifen, so daß der Deckel auf die innenseitige Wand aufgeklipst werden kann.

Bei einer weiteren besonderen Ausführungsform der Erfindung weist die innenseitige Wand Stege auf, welche in entsprechende Ausnehmungen des Deckels eingreifen. Durch die Stege, welche als Rippen in Längsrichtung der Rückenlehne verlaufen können, erhält die Rückenlehne eine zusätzliche Stabilität. Die Stege können mit den Ausnehmungen des Deckels verklebt sein. Besonders günstig ist es jedoch, wenn die Stege als Rastnasen ausgebildet sind, welche in die Ausnehmungen einrasten. Hierdurch läßt sich die Verbindung sehr leicht herstellen. Selbstverständlich können die Stege anstatt auf der innenseitigen Wand auch am Deckel angebracht sein und die Ausnehmungen statt am Deckel an der innenseitigen Wand ausgebildet sein.

Weitere Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: einen erfindungsgemäßen Fahrgastsitz in perspektivischer Darstellung,
- Figur 2: einen Schnitt durch eine erste Ausführungsform einer erfindungsgemäßen Rückenlehne und
- Figur 3: einen Schnitt einer zweiten Ausführungsform einer erfindungsgemäßen Rückenlehne.

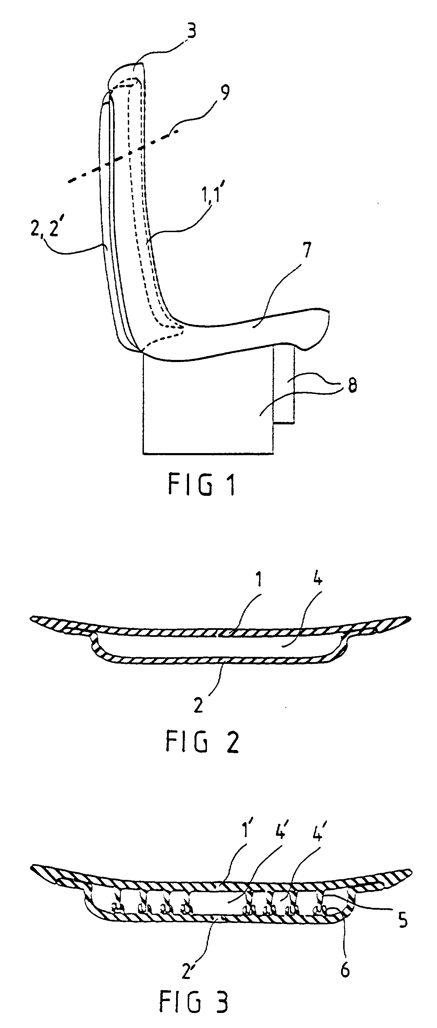

Wie der Figur 1 entnommen werden kann, besteht ein erfindungsgemäßer Fahrgastsitz aus einer Sitzschale, welche aus einem Sitzteil 7 und einer Rückenlehne 3 besteht. Das Sitzteil 7 ist auf Füßen 8 angeordnet. Die Rückenlehne 3 der Sitzschale ist doppelwandig ausgebildet und besteht aus einer innenseitigen Wand 1, 1' und einer außenseitigen Wand 2, 2'. Die Sitzschale weist kein Sitzgestell auf. Einen Schnitt durch die Rückenlehne 3 entlang der Linie 9 ist in den Figuren 2 und 3 dargestellt.

Wie der Figur 2 entnommen werden kann, ist die rückwärtige Wand 2 der Rückenlehne 3 als schalenförmiger Deckel ausgebildet. Die Ränder des Deckels 2 sind abgebogen, so daß sie parallel zur innenseitigen Wand 1 der Rückenlehne 3 verlaufen. Der Deckel 2 ist mit seinen abgebogenen Rändern auf der innenseitigen Wand aufgeklebt. Die innenseitige Wand 1 weist eine Ausnehmung auf, deren Tiefe der Dicke der abgebogenen Ränder des Deckels 2 entspricht, so daß zwischen den abgebogenen Rändern des Deckels 2 und der innenseitigen Wand 1 nahezu kein sichtbarer Übergang besteht. Die Ausnehmung könnte auch so ausgebildet sein, daß die abgebogenen Ränder des Deckels 2 zumindest teilweise von der innenseitigen Wand 1 übergriffen werden. Hierdurch läßt sich der Deckel 2 auf die innenseitige Wand 1 aufklipsen.

Wie der Figur 3 entnommen werden kann, kann die innenseitige Wand 1' der Rükkenlehne 3 auch Stege 5 aufweisen, welche sich als Rippen in Längsrichtung der Rückenlehne 3 erstrecken. Der Deckel 2' enthält an den Stegen 5 korrespondierenden Stellen Elemente 6, welche Ausnehmungen bilden, in welche die Stege 5 eingreifen. Die Stege 5 können mit den Ausnehmungen 6 verrastbar ausgebildet sein. Sie können aber auch mit den Ausnehmungen 6 verklebt sein. Durch die Stege 5 werden zwischen der innenseitigen Wand 1' und dem Deckel 2' mehrere Hohlräume 4' gebildet.

## Patentansprüche

1. Fahrgastsitz für ein Personenbeförderungsfahrzeug mit einer dünnwandigen Rükkenlehne (3), welche
doppelwandig ausgebildet ist,
**dadurch gekennzeichnet,**
**daß** die außenseitige Wand (2, 2') der Rückenlehne (3) als Deckel (2, 2') ausgebildet ist.

2. Fahrgastsitz nach Anspruch 1,
**dadurch gekennzeichnet,**
**daß** zwischen den beiden Wänden (1, 2, 1', 2') der Rückenlehne (3) ein Hohlraum (4, 4') besteht.

3. Fahrgastsitz nach Anspruch 2,
**dadurch gekennzeichnet,**
**daß** der Deckel (2, 2') auf die innenseitige Wand (1, 1') der Rückenlehne (3) aufgeklebt ist.

4. Fahrgastsitz nach Anspruch 2 oder 3,
**dadurch gekennzeichnet,**
**daß** die innenseitige Wand (1') Stege (5) aufweist, welche in entsprechende Ausnehmungen (6) des Deckels (2') eingreifen.

5. Fahrgastsitz nach Anspruch 4,
**dadurch gekennzeichnet,**
**daß** die Stege (5) als Rastnasen ausgebildet sind, welche in die Ausnehmungen (6) einrasten.

## Claims

1. Passenger seat for a passenger transport vehicle, having a thin-walled backrest (3), which is designed double-walled, **characterised in that** the external wall (2, 2') of the backrest (3) is designed as a cover (2, 2').

2. Passenger seat according to Claim 1, **characterised in that** between the two walls (1, 2, 1', 2') of the backrest (3), a hollow space (4, 4') is formed.

3. Passenger seat according to Claim 2, **characterised in that** the cover (2, 2') is cemented to the internal wall (1, 1') of the backrest (3).

4. Passenger seat according to Claim 2 or 3, **characterised in that** the internal wall (1') has webs (5) which engage in corresponding recesses (6) of the cover (2').

5. Passenger seat according to Claim 4, **characterised in that** the webs (5) are designed as detents which latch into the recesses (6).

## Revendications

1. Siège de passager pour un véhicule de transport de personnes, muni d'un dossier (3) à paroi mince qui est réalisé à double paroi,
**caractérisé par le fait**
**que** la paroi extérieure (2, 2') dudit dossier (3) est réalisée sous la forme d'une coiffe (2, 2').

2. Siège de passager selon la revendication 1,
**caractérisé par le fait**
**qu'**une cavité (4, 4') est réservée entre les deux parois (1, 2, 1', 2') du dossier (3).

3. Siège de passager selon la revendication 2,
**caractérisé par le fait**
**que** la coiffe (2, 2') est collée sur la paroi intérieure (1, 1') du dossier (3).

4. Siège de passager selon la revendication 2 ou 3,
**caractérisé par le fait**
**que** la paroi intérieure (1') présente des membrures (5) pénétrant dans des évidements correspondants (6) de la coiffe (2').

5. Siège de passager selon la revendication 4,
**caractérisé par le fait**
**que** les membrures (5) sont réalisées sous la forme de becs encliquetables qui s'encliquettent dans les évidements (6).
